# EUROPÄISCHE PATENTANMELDUNG

(11) **EP 1 168 325 A2**
(43) Veröffentlichungstag der Anmeldung: **02.01.2002**
(21) Anmeldenummer: 01108794.7
(22) Anmeldetag: 07.04.2001
(51) Int. Cl.: G11B 19/12, G11B 19/26

(54) **Audiogerät zum Abspielen und zur Verarbeitung von auf einem optischen Speichermedium abgespeicherten komprimierten und unkomprimierten Audiodateien**

(30) Priorität: 23.06.2000 DE 10030841
(71) Anmelder: Mannesmann VDO Aktiengesellschaft, 60388 Frankfurt am Main (DE)
(72) Erfinder: Brésit, Jean-Marc, 78120 Rambouillet (FR)
(74) Vertreter: Richter, Jürgen

(57) **Zusammenfassung**

Die Erfindung betrifft ein Audiogerät, wie ein CD- oder DVD-Abspielgerät. Um bei einem solchen Audiogerät sowohl komprimierte als auch unkomprimierte Audiodaten in Echtzeit ohne Zwischenspeicherung auslesen und wiedergeben zu können, ist erfindungsgemäß vorgesehen, dass das Audiogerät so ausgelegt ist, dass die Rotationsgeschwindigkeit des Speichermediums (1) in Abhängigkeit von der Art der auszulesenden Audiodaten einstellbar ist.

## Beschreibung

Die Erfindung betrifft ein Audiogerät zum Auslesen und zur Verarbeitung von auf einem optischen Speichermedium abgespeicherten digitalen Audiodaten mit einer geregelten Antriebseinrichtung, die das Speichermedium in eine Rotation versetzt und deren Rotationsgeschwindigkeit veränderbar ist, optischen Abtastmitteln zum Auslesen der Audiodaten von dem Speichermedium, einem Dekomprimierungsmodul für komprimierte Audiodaten, dem die ausgelesenen Audiodaten zugeführt werden, und Auswertemitteln für die digitalen Audiodaten.

Ein derartiges Audiogerät ist aus der WO 99/28902 bekannt. Das dort angegebene Gerät dient zum Abspielen von komprimierten Audiodateien, wobei die Audiodaten mit einer variablen Bitrate auf dem Speichermedium abgespeichert sind. Zusätzlich ist auf dem Speichermedium ein Geschwindigkeitsprofil abgespeichert. Beim Auslesen der Audiodaten wird die Rotationsgeschwindigkeit der Antriebseinrichtung durch dieses Geschwindigkeitsprofil gesteuert.

Andere Audiogeräte zur Wiedergabe von unkomprimierten Audiodaten arbeiten mit einer festen Bitrate. Zur zusätzlichen Wiedergabe von komprimierten Audiodaten enthalten diese Geräte ein Dekomprimierungsmodul sowie einen ausreichend großen Speicher zum Zwischenspeichern der Audiodaten. Während die Wiedergabe von unkomprimierten Audiodaten bei diesen Geräten beispielsweise in Echtzeit erfolgen kann, ist bei Wiedergabe von komprimierten Audiodaten, die einen höheren Informationsgehalt aufweisen, bei gleichbleibender Auslesegeschwindigkeit eine Zwischenspeicherung der komprimierten Audiodaten erforderlich.

Aufgabe der Erfindung ist es, ein Audiogerät zur Wiedergabe sowohl von komprimierten als auch von unkomprimierten Audiodaten anzugeben, dass einen vereinfachten Aufbau aufweist.

Die Aufgabe wird bei einem gattungsgemäßen Audiogerät dadurch gelöst, dass das Audiogerät zum Auslesen von komprimierten und unkomprimierten Audiodaten von dem Speichermedium so ausgelegt ist, dass die Rotationsgeschwindigkeit in Abhängigkeit von der Art der auszulesenden Audiodaten einstellbar ist. Bei der erfindungsgemäßen Ausgestaltung des Audiogerätes werden somit unterschiedliche Rotationsgeschwindigkeiten des Speichermediums eingestellt, wobei erfindungsgemäß für das Auslesen von komprimierten und unkomprimierten Audiodaten unterschiedliche Rotationsgeschwindigkeiten gewählt werden. Bei einer solchen Ausgestaltung der Erfindung wird die Ausleserate der Audiodaten beim Auslesen komprimierter Daten daher in der Regel geringer sein, als beim Auslesen unkomprimierter Daten. Durch diese Anpassung der Rotationsgeschwindigkeit an die Art der auszulesenden Audiodaten und damit an die Informationsdichte der Audiodaten kann insbesondere eine Echtzeitwiedergabe sowohl für komprimierte als auch unkomprimierte Audiodaten ohne Zwischenspeicherung der ausgelesenen Audiodaten erreicht werden. Hierdurch kann der ansonsten erforderliche Zwischenspeicher vollständig entfallen oder zumindest mit einer geringen Speicherkapazität ausgelegt werden.

Die Einstellung der Rotationsgeschwindigkeit für komprimierte und unkomprimierte Audiodaten kann manuell über Tasten am Audiogerät selbst erfolgen. Beispielsweise kann hierfür vorgesehen sein, dass zur Wiedergabe von komprimierten Audiodaten eine Taste gedrückt wird, die eine Verringerung der Rotationsgeschwindigkeit der Antriebseinrichtung bewirkt. Vorzugsweise ist jedoch vorgesehen, dass diese Umschaltung automatisch erfolgt. Dies kann dadurch erfolgen, dass aus den auf dem Speichermedium abgespeicherten Informationen die Art der abgespeicherten Audiodaten ableitbar ist. Entsprechende Informationen sind beispielsweise in bekannter Weise in einem sogenannten Header abgelegt. Wird von dem Audiogerät erkannt, dass von dem Speichermedium komprimierte Daten ausgelesen werden sollen, so wird automatisch die Rotationsgeschwindigkeit der Antriebseinrichtung reduziert. Wird jedoch erkannt, dass unkomprimierte Audiodaten ausgelesen werden sollen, so wird eine höhere Rotationsgeschwindigkeit eingestellt und insbesondere das Dekomprimierungsmodul automatisch umgangen.

Bei den auf dem Speichermedium abgespeicherten Audiodaten kann es sich insbesondere um verlustbehaftet komprimierte und/oder unsymmetrisch komprimierte Audiodaten handeln. Entsprechende Komprimierungsmethoden sind hinreichend bekannt. Insbesondere kann es sich bei den komprimierten Audiodaten um solche handeln, die nach dem MP3 Standard komprimiert sind. Bei der verlustbehafteten Komprimierung von Daten gehen Informationen verloren, jedoch ist der Komprimierungsgrad deutlich höher als bei der verlustfreien Komprimierung. Bei symmetrischen Komprimierungsalgorithmen sind der Zeit- und Rechenaufwand für die Komprimierung und Dekomprimierung gleich, während bei den bevorzugten unsymmetrischen Verfahren die Erstellung der komprimierten Daten deutlich länger dauert als die Dekomprimierung. Von Vorteil ist bei der unsymmetrischen Komprimierung darüber hinaus, dass sehr hohe Komprimierungsraten erzielt werden können.

Mit MP3 wird ein nach ISO standardisiertes Verfahren zur Komprimierung von Audiodaten bezeichnet. Bei MP3 handelt es sich um ein sogenanntes psychoakustisches Verfahren, bei dem nichthörbare Teile eines Musikstücks zur Reduktion der Datenmenge entfernt werden. MP3 ist ein unsymmetrisches, verlustbehaftetes Komprimierungsverfahren. Bis zu einer Komprimierung von 1 zu 12 ist die Qualität von MP3 Dateien noch auf CD Niveau. Auf einer herkömmlichen CD können somit unter Verwendung der Komprimierung mit dem MP3 Verfahren digitale Audiodaten mit einer Musiklaufzeit von ca. 15 Stunden abgespeichert werden.

Neben der Verwendung einer CD als Speichermedium wird insbesondere die Verwendung einer DVD als Speichermedium bevorzugt, da diese eine bis zu 25-fach größere Speicherkapazität als eine CD aufweist.

Auf dem Speichermedium können komprimierte und unkomprimierte Audiodaten gleichzeitig vorhanden sein. Durch eine entsprechende Information im Header jedes Musikstückes wird von dem Audiogerät automatisch erkannt, ob komprimierte oder unkomprimierte Audiodaten ausgelesen werden sollen und die Rotationsgeschwindigkeit des Speicherelementes kann erfindungsgemäß eingestellt werden.

Die Erfindung wird nachfolgend anhand von Ausführungsbeispielen und der Zeichnung näher erläutert. Es zeigen:
- Fig. 1: ein Blockschaltbild einer ersten Ausführungsform
- Fig. 2: ein Blockschaltbild einer zweiten Ausführungsform

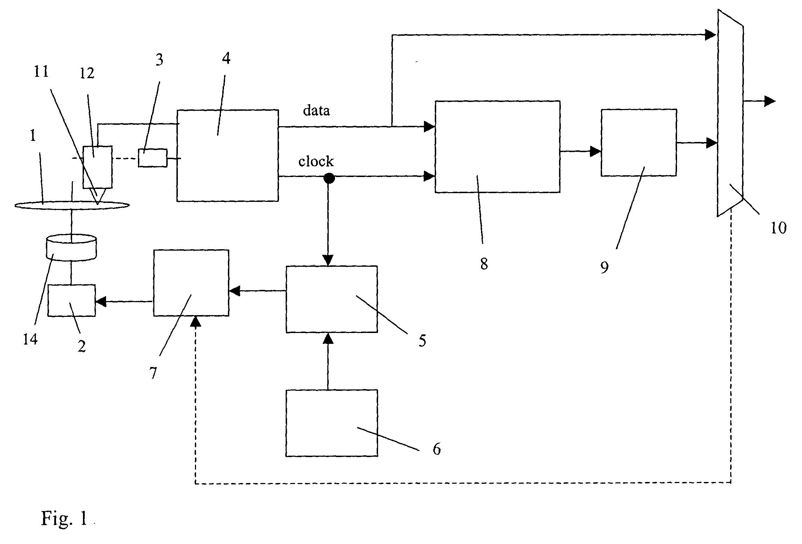

Das in Figur 1 dargestellte Blockschaltbild eines Audiogerätes, das hier als CD Abspielgerät ausgebildet ist, weist einen in weiten Teilen bekannten Aufbau kommerziell erhältlicher Geräte auf. Das Speichermedium 1, bei dem es sich um eine CD, eine CD-ROM oder eine DVD handeln kann, wird von einer Antriebseinrichtung 2 mit einem Rotationsmotor 14 in eine Rotationsbewegung versetzt. Durch die Rotation wird das Speichermedium 1 an einer optischen Abtasteinheit 12 mit einem Lesekopf 11 vorbeigeführt, der eine Lasereinheit zum Abtasten der Oberfläche des Speicherelements enthält. Die Abtasteinheit 12 mit dem Lesekopf 11 ist durch die Verstelleinrichtung 3 ebenfalls gegenüber dem Speichermedium 1 beweglich angeordnet, sodass durch die Rotation des Speichermediums 1 und eine Linearbewegung der Abtasteinheit 12 die gesamte mit Dateninhalten versehene Oberfläche des Speicherelementes optisch abgetastet werden kann. Die Signale der Abtasteinheit 12 werden einem Extraktionsmodul 4 zugeführt, welches die Daten des Speichermediums 1 und den zugehörigen Takt extrahiert. Das Taktsignal wird einer Phasenvergleichseinheit 5 zugeführt, die gleichzeitig Signale eines Taktgenerators 6 erhält. Der Taktgenerator 6 ist zur Erzeugung von Taktsignalen mit Frequenzen von 32 kHz, 44,1 kHz und 48 kHz ausgelegt.

Die von der Phasenvergleichseinheit 5 ermittelte Phasendifferenz zwischen dem aus den Audiodaten ermittelten Taktsignal und dem von dem Taktgenerator vorgegebenen Taktsignal wird einer Kontrolleinheit 7 zur Regelung der Rotationsgeschwindigkeit der Antriebseinheit 2 zugeführt, die den Rotationsmotor 14 enthält. Hierdurch können neben einer bekannten Konstanthaltung der Rotationsgeschwindigkeit insbesondere erfindungsgemäß unterschiedliche Rotationsgeschwindigkeiten eingestellt werden, abhängig davon, ob es sich bei den ausgelesenen Daten um komprimierte oder unkomprimierte Audiodaten handelt. Die Einstellung der Rotationsgeschwindigkeit kann beispielsweise durch eine Pulsweitenmodulation (PWM) des Ansteuersignals erfolgen

Durch die Anpassung der Rotationsgeschwindigkeit des Speichermediums 1 und damit der Datenrate an die Art der ausgelesenen Daten können die von dem Extraktionsmodul 4 extrahierten Audiodaten auch im Falle von komprimierten Audiodaten ohne Zwischenspeicherung direkt einem Blockdecoder 8 zugeführt werden. Ein Speicherelement zur Zwischenspeicherung der Daten ist daher nicht erforderlich. Die Daten werden nämlich entsprechend der für Echtzeitwiedergabe erforderlichen Datenrate bereitgestellt.

In dem Blockdecoder 8 findet eine Korrektur fehlerhafter Daten statt. Die korrigierten Audiodaten werden anschließend dem Dekomprimierungsmodul 9 zugeführt, in dem in an sich bekannter Weise eine Dekomprimierung der Audiodaten erfolgt. Die dekomprimierten Daten werden anschließend weiterhin Auswertemitteln 10 zugeführt, die insbesondere eine Digital/Analog-Wandlung und unterschiedliche Verstärkungsstufen enthalten, sodass anschließend in bekannter Weise eine Wiedergabe der nunmehr analogen Audiosignale über Lautsprecher oder Kopfhörer erfolgen kann. Zusätzlich werden die von dem Extraktionsmodul 4 ausgegebenen Daten direkt einem weiteren Eingang der Auswertemittel 10 zugeführt, sodass hierdurch eine Umgehung des Blockdecoders 8 und des Dekomprimierungsmoduls 9 im Falle von unkomprimierten Audiodaten gewährleistet ist. Die Entscheidung, ob es sich bei dem von dem Extraktionsmodul 4 den Auswertemitteln 10 direkt zugeführten Audiodaten um unkomprimierte Audiodaten handelt, wird dabei in den Auswertemitteln 10 selbst erfolgen. In einer Abwandlung der beschriebenen Ausführungsform kann daher auch von den Auswertemitteln 10 ein Signal an die Kontrolleinheit 7 der Antriebseinrichtung 2 geleitet werden, durch das die Rotationsgeschwindigkeit in Abhängigkeit von der Art der ausgelesenen Daten eingestellt wird.

Die Unterscheidung zwischen einer Audio-CD mit unkomprimiertem Inhalt und einer CD-ROM mit komprimierten Daten kann beispielsweise durch Auswertung der ersten Sektoren erfolgen, die bei einer CD-ROM mit "Null" gefüllt sind. Werden dagegen in diesen Sektoren Daten gefunden, so handelt es sich hierbei insbesondere um eine sogenannte "table of contents" (TOC), sodass eine Audio-CD vorliegt.

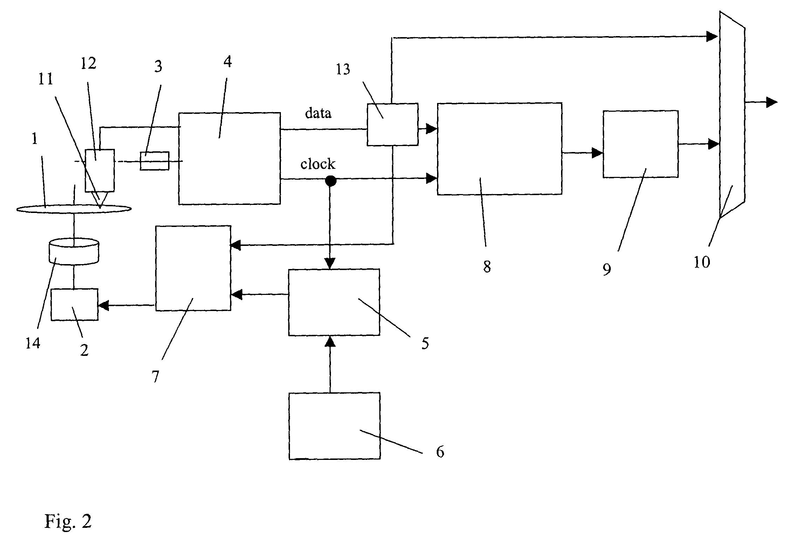

In Fig. 2 ist eine alternative Ausführungsform dargestellt. Danach wird durch ein zwischen das Extraktionsmodul 4 und den Blockdecoder 8 in die Datenleitung eingebautes Entscheidungsmodul 13 geprüft, ob es sich bei den eingehenden Daten um komprimierte oder unkomprimierte Audiodaten handelt. Die Prüfung kann hierbei durch Auswertung der Header-Informationen erfolgen, die jeder Audiodatei vorangestellt sind. Insbesondere kann diese Prüfung auch in einem Mikroprozessor des Audiogeräts erfolgen, so dass das Entscheidungsmodul 13 zumindest teilweise in einen solchen Mikroprozessor in Form eines Programms integriert ist. Abhängig vom Ergebnis dieser Prüfung werden die Audiodaten dann entweder dem Blockdecoder oder den Auswertemitteln direkt zugeleitet, wobei hierfür ein entsprechendes Schaltelement vorgesehen sein kann. Von dem Entscheidungsmodul 13 wird weiterhin ein Signal an die Kontrolleinheit 7 der Antriebseinrichtung 2 geleitet, das die Einstellung der Rotationsgeschwindigkeit der Antriebseinrichtung 2 und damit des Speichermediums 1 abhängig von der Art der auszulesenden Audiodaten veranlasst.

Durch die erfindungsgemäße Einstellung der Rotationsgeschwindigkeit in Abhängigkeit von der Art der ausgelesenen Audiodaten werden insbesondere die folgenden Vorteile erreicht:
- Auf eine Pufferung der Daten kann auch bei komprimierten Daten verzichtet werden. Die Daten können in Echtzeit ausgelesen und wiedergegeben werden.
- Die Geschwindigkeit des Rotationsmotors 14 und der Verstelleinrichtung 3 kann verringert werden. Dies führt zu einer Verringerung der Kosten, des Energieverbrauchs und von Problemen der elektromagnetischen Verträglichkeit (EMV/EMI).
- Die aktiven Arbeitsphasen der Laserdiode im Lesekopf 11 werden verringert. Dies hat eine Verringerung der Temperatur der Laserdiode und eine Erhöhung ihrer Zuverlässigkeit zur Folge.

## Patentansprüche

1. Audiogerät zum Auslesen und zur Verarbeitung von auf einem optischen Speichermedium (1) abgespeicherten digitalen Audiodaten mit
- einer geregelten Antriebseinrichtung (2), die das Speichermedium (1) in eine Rotation versetzt und deren Rotationsgeschwindigkeit veränderbar ist,
- optischen Abtastmitteln (12) zum Auslesen der Audiodaten von dem Speichermedium (1),
- einem Dekomprimierungsmodul (9) für komprimierte Audiodaten, dem die ausgelesenen Audiodaten zugeführt werden und
- Auswertemitteln (10) für die digitalen Audiodaten,
**dadurch gekennzeichnet, dass** das Audiogerät zum Auslesen von komprimierten und unkomprimierten Audiodaten von dem Speichermedium (1) so ausgelegt ist, dass die Rotationsgeschwindigkeit in Abhängigkeit von der Art der auszulesenden Audiodaten einstellbar ist.

2. Audiogerät nach Anspruch 1, **dadurch gekennzeichnet, dass** die Rotationsgeschwindigkeit beim Auslesen komprimierter Daten geringer ist als beim Auslesen unkomprimierter Daten.

3. Audiogerät nach Anspruch 1 oder 2, **dadurch gekennzeichnet, dass** es Mittel zur automatischen Umgehung des Dekomprimierungsmoduls (9) beim Auslesen unkomprimierter Audiodaten enthält.

4. Audiogerät nach einem der vorhergehenden Ansprüche, **dadurch gekennzeichnet, dass** die Rotationsgeschwindigkeit automatisch so einstellbar ist, dass eine kontinuierliche Audiowiedergabe ohne Zwischenspeicherung der ausgelesenen Audiodaten sowohl für komprimierte als auch unkomprimierte Audiodaten durchführbar ist.

5. Audiogerät nach einem der vorhergehenden Ansprüche, **dadurch gekennzeichnet, dass** es sich bei den komprimierten Audiodaten um verlustbehaftet komprimierte Audiodaten handelt.

6. Audiogerät nach einem der vorhergehenden Ansprüche, **dadurch gekennzeichnet, dass** es sich bei den komprimierten Audiodaten um unsymmetrisch komprimierte Audiodaten handelt.

7. Audiogerät nach einem der vorhergehenden Ansprüche, **dadurch gekennzeichnet, dass** das Gerät zur Wiedergabe von komprimierten Audiodaten nach dem MP3-Standard ausgebildet ist.

8. Audiogerät nach einem der vorhergehenden Ansprüche, **dadurch gekennzeichnet, dass** die Rotationsgeschwindigkeit automatisch aus auf dem Speichermedium (1) abgespeicherten Informationen bestimmbar ist.

9. Audiogerät nach einem der vorhergehenden Ansprüche, **dadurch gekennzeichnet, dass** es sich bei dem Speichermedium (1) um eine CD (compact disk) handelt.

10. Audiogerät nach einem der vorhergehenden Ansprüche, **dadurch gekennzeichnet, dass** es sich bei dem Speichermedium (1) um eine DVD (Digital Versatile Disk) handelt.

11. Audiogerät nach einem der vorhergehenden Ansprüche, **dadurch gekennzeichnet, dass** das Speichermedium (1) sowohl komprimierte als auch umkomprimierte Audiodaten enthält.
